# EUROPEAN PATENT APPLICATION

(11) **EP 4 800 660 A1**
(43) Date of publication of application: **02.09.2026**
(21) Application number: 25160606.7
(22) Date of filing: 27.02.2025
(51) Int. Cl.: G06V 10/82, G06V 20/56

(54) **DIRECTION ESTIMATION FOR AUTONOMOUS VEHICLE NAVIGATION**

(71) Applicant: Siemens Aktiengesellschaft, 80333 München (DE)
(72) Inventor: Hadwiger, Simon, 94259 Kirchberg im Wald (DE); Kube, David, 92283 Lauterhofen (DE); Lavrik, Vladimir, 63303 Dreieich (DE)
(74) Representative: Siemens Patent Attorneys

(57) **Abstract**

The present disclosure provides a machine learning based vehicle controller system for estimating direction towards a static target from a moving object. The system includes a direction estimation module configured to receive condensed visual information from a detector which processes visual input of a camera and actual velocity data of the moving object. The direction estimation module estimates a direction towards the static target when the static target is not visible to the camera. The system also includes a vehicle controller configured to receive the estimated direction from the direction estimation module and generate control commands for the moving object based on the estimated direction. The direction estimation module represents the estimated direction as a point on a unit circle with the moving object's reference frame as the circle's origin.

## Description

### FIELD OF INVENTION

The present disclosure relates to direction estimation for autonomous vehicle navigation, and more particularly to a system, computer implemented method, and computer program product for estimating direction towards a static target from a moving object when the target is no longer visible.

### BACKGROUND

Automated guided vehicles (AGVs) are widely used in industrial and logistics environments for material handling and transportation tasks. These autonomous vehicles rely on various navigation and control systems to move efficiently and safely within their operating environments. Typically, AGVs utilize global positioning systems, simultaneous localization and mapping (SLAM) techniques, or predefined path following methods to navigate towards target objects or locations.

In many applications, AGVs need to approach and interact with static targets such as load carriers, pallets, or other objects. This often requires the AGV to maintain a sense of direction towards the target even when it is temporarily out of the vehicle's field of view. Traditional approaches rely heavily on precise localization of both the AGV and the target object within a global coordinate system. This usually involves expensive sensor systems like LiDAR or complex computer vision algorithms for pose estimation.

However, these conventional methods face challenges in dynamic or partially unstructured environments where the exact position of target objects may not be known in advance or may change. Additionally, reliance on global positioning can introduce errors and reduce flexibility in scenarios where rapid adaptation is required. The computational complexity of some vision-based pose estimation techniques can also limit real-time performance on resource-constrained platforms.

WO2024002871A1 discloses an autonomous navigation system for vehicles approaching target objects, utilizing image capture devices, computer vision techniques, and various sensors to detect targets, determine vehicle position, and generate trajectories. The system employs machine learning algorithms to enhance object detection and path planning. However, it primarily relies on continuous visual detection of the target object, which may limit its effectiveness in scenarios where the target is temporarily occluded or outside the camera's field of view. While comprehensive for visible targets, this prior art does not specifically address the challenge of maintaining direction estimation when the target object is not visible, potentially limiting its applicability in dynamic environments or situations with restricted sensor coverage.

It has been appreciated that a direction estimation system is needed that overcomes one or more of these problems.

### SUMMARY

In a first aspect, a system for estimating direction towards a static target from a moving object is provided. The system includes: a camera configured to capture visual input of an environment; a detector configured to process the visual input to generate condensed visual information; a direction estimation module configured to receive the condensed visual information and actual velocity data of the moving object, and estimate a direction towards the static target when the static target is not visible to the camera; and a machine learning based vehicle controller configured to receive the estimated direction from the direction estimation module and generate control commands for the moving object based on the combination of the estimated direction and condensed visual information.

This system enables continuous vision-based navigation towards a static target even when the target is temporarily out of view, improving the robustness and reliability of autonomous navigation systems. As long as corresponding movement patterns have been considered during training, there may be no further restrictions. Regarding speed, it is important that if the target is not visible, the speed of the moving object is measured as accurately as possible.

The system may further include the direction estimation module being configured to represent the estimated direction as a point on a unit circle with the moving object's reference frame as the circle's origin. The longer the target is not visible, the greater an inaccuracy may become. As soon as the object is visible again, this inaccuracy is corrected.

Representing the estimated direction as a point on a unit circle provides a consistent and intuitive representation of direction, facilitating easier processing and interpretation by the machine learning based vehicle controller. This may be further strengthened by providing the sine and cosine of the direction as input to the machine learning based vehicle controller to avoid discontinuity in the input representation.

The direction estimation module may comprise a recurrent neural network or a long short-term memory (LSTM) network.

Utilizing a recurrent neural network or LSTM network allows the direction estimation module to effectively process time-series data and maintain temporal context, improving the accuracy of direction estimation over time.

The system may further comprise an inertial measurement unit configured to provide more accurate velocity information to the direction estimation module.

Incorporating more accurate velocity information from an inertial measurement unit enhances the accuracy of direction estimation by compensating for potential errors or drift in velocity measurements.

The condensed visual information may comprise bounding box data of the static target extracted from the visual input.

Using bounding box data as condensed visual information provides a compact yet informative representation of the static target's position and size, reducing computational complexity while maintaining essential spatial information. If there are multiple static targets in the environment, a choice will be made by the detector and only one (of multiple possible) bounding boxes will be presented.

In a second aspect, a method for estimating direction towards a static target from a moving object is provided. The method comprises: capturing visual input of an environment using a camera; processing the visual input to generate condensed visual information; receiving the condensed visual information and actual velocity data of the moving object at a direction estimation module; estimating, using the direction estimation module, a direction towards the static target when the static target is not visible to the camera; and generating control commands for the moving object based on the combination of the estimated direction and condensed visual information using a machine learning based vehicle controller.

This method enables continuous navigation and control of a moving object towards a static target, even when the target is temporarily occluded or out of view, improving the overall performance and reliability of autonomous navigation systems.

The method may further include estimating the direction by representing the estimated direction as a point on a unit circle with the moving object's reference frame as the circle's origin.

Representing the estimated direction as a point on a unit circle provides a consistent and easily interpretable format for direction information, facilitating more efficient processing by the machine learning based vehicle controller.

The method may include using a direction estimation module that comprises a recurrent neural network or a long short-term memory (LSTM) network.

Employing a recurrent neural network or LSTM network in the direction estimation module allows for effective processing of sequential data and maintenance of temporal context, leading to more accurate direction estimates over time.

The method may further comprise providing additional velocity information to the direction estimation module using an inertial measurement unit.

Incorporating additional velocity information from an inertial measurement unit enhances the robustness of the direction estimation by compensating for potential inaccuracies in velocity measurements derived from visual data alone.

The method may include using condensed visual information that comprises bounding box data of the static target extracted from the visual input.

Utilizing bounding box data as condensed visual information provides a compact yet informative representation of the static target's position and size, reducing computational requirements while retaining essential spatial information for direction estimation.

The method may further comprise training of the direction estimation module in a supervised manner using predefined trajectories from expert demonstrations. The expert responsible for the generation of trajectories might either be a mathematically described control algorithm or another machine learning vehicle controller trained with privileged information.

The training data for the direction estimation module comprise of trajectories in which the static target is temporarily not visible. To reduce the potentially arising covariant shift standard methods for online data generation with the machine learning based vehicle controller may be applied.

A trajectory in the training data is a series of consecutive time steps, containing the velocity of the moving object, the condensed visual information and the set point of the moving object's velocity.

A separate training of the direction estimation module using predefined trajectories and the modular system architecture allows for improved accuracy and generalization of the direction estimation process, enhancing the overall performance of the system across various scenarios.

The method may include generating the control commands by combining the estimated direction with the condensed visual information and processing the combined information using the machine learning based vehicle controller.

Combining the estimated direction with condensed visual information provides a more comprehensive input to the vehicle controller, enabling more informed and accurate control decisions, especially in scenarios where the static target is temporarily not visible.

The method may further comprise detecting when the static target becomes visible to the camera and updating the estimated direction based on the visual input of the static target.

Updating the estimated direction when the static target becomes visible again ensures that the system maintains accurate direction information, seamlessly transitioning between estimation-based and direct visual-based navigation.

The method may be applied where the moving object is an automated guided vehicle (AGV) and the static target is a load carrier.

Applying this method to AGVs approaching load carriers demonstrates its practical utility in industrial and logistical settings, potentially improving the efficiency and reliability of automated material handling operations.

In a third aspect, a computer program product comprising instructions which, when executed on a processor, cause the processor to perform the method of estimating direction towards a static target from a moving object is provided.

This computer program product enables the implementation of the direction estimation method on various computing platforms, facilitating widespread adoption and integration of the technology in diverse autonomous navigation systems.

### BRIEF DESCRIPTION OF FIGURES

Embodiments of the invention will be described, by way of example, with reference to the following drawings, in which:
FIG. 1 illustrates a block diagram of a system component for estimating direction towards a static target from a moving object, according to aspects of the present disclosure.
FIG. 2 illustrates a system diagram of an automated guided vehicle approaching a load carrier, in accordance with example embodiments.
FIG. 3 illustrates a system diagram for representing direction estimation in a two-dimensional plane, according to an embodiment.

Common reference numerals are used throughout the figures to indicate similar features.

### DETAILED DESCRIPTION

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein.

It will be understood that the above description of a preferred embodiment is given by way of example and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

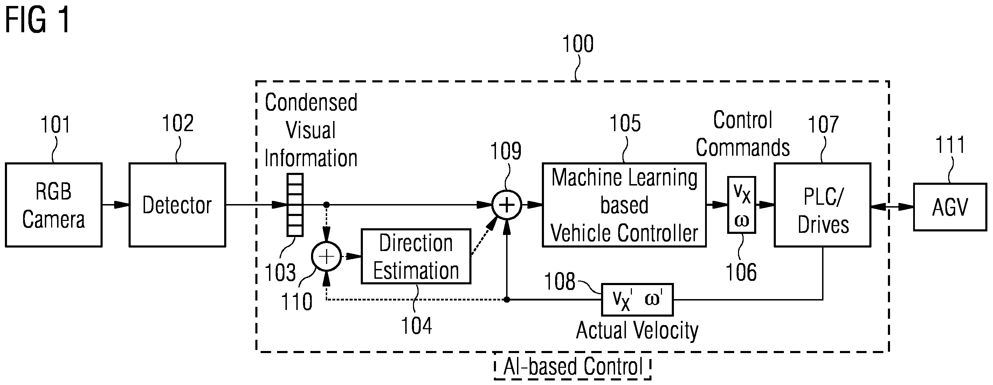

A system component 100 for estimating direction towards a static target from a moving object is provided. The system component 100 includes a direction estimation module 104, a machine learning based vehicle controller 105, and PLC/drives 107, as shown in FIG. 1.

A camera 101 (e. g. a RGB camera, a monochrome camera or any other suitable visual sensor) captures visual input of the environment. No camera with additional depth information (as usually used) is required.

A detector 102 processes the visual input from the camera 101 to generate condensed visual information 103. The direction estimation module 104 receives the condensed visual information 103 from the detector 102 and actual velocity data 108 of the moving object from the PLC/drives 107. The direction estimation module 104 estimates a direction towards the static target even if the static target is not visible to the camera 101. In other words, it always estimates the direction towards the target. If the object is visible, it can be estimated based on the condensed visual information, if the object is not visible, it is estimated based on the objects movement and the known previous estimation (internal state) of the module.

In an advantageous embodiment of the invention, the machine learning based vehicle controller 105 receives the estimated direction from the direction estimation module 104. Based on the estimated direction, the machine learning based vehicle controller 105 generates control commands 106 for the moving object. The control commands 106 are then sent to the PLC/drives 107 for execution.

The system component 100 operates in a closed-loop manner, with the PLC/drives 107 providing feedback in the form of actual velocity data 108 to the direction estimation module 104. This feedback loop allows the system component 100 to continuously update and refine its direction estimation and control commands based on the actual movement of the moving object.

The RGB camera 101 is configured to capture color images of the surroundings, providing visual data that can be processed by the detector 102. The RGB camera 101 may be mounted on the moving object, such as an automated guided vehicle, to provide a continuous stream of visual information as the moving object navigates through its environment. The RGB camera 101 captures images that include the static target when the static target is within the camera's field of view. These images serve as the primary source of visual information for the system component 100. The visual input captured by the RGB camera 101 is then sent to the detector 102 for further processing and extraction of condensed visual information 103.

The use of a RGB camera 101 allows the system component 100 to operate based on color image data, which can provide rich information about the environment and the static target. This visual input is crucial for the overall functionality of the system component 100, as the subsequent processing steps rely on the quality and accuracy of the initial visual data captured by the camera 101.

This is advantageous because cameras for color images are cheaper than color depth images and there are already many algorithms for color images, allowing the detector to be generated cost-effectively.

The detector 102 processes the visual input from the RGB camera 101 to generate condensed visual information 103. The detector 102 receives the raw image data captured by the (RGB) camera 101 and performs image processing operations to extract relevant features and information from the visual input.

The detector 102 analyzes the visual input to identify and locate the static target within the image. The detector 102 may employ computer vision techniques, such as object detection algorithms, to recognize and isolate the static target from the background and other objects in the scene.

The detector 102 generates condensed visual information 103 based on the processed visual input. The condensed visual information 103 comprises a compact representation of the relevant features extracted from the raw image data. In an example, the condensed visual information 103 includes bounding box data of the static target extracted from the visual input. A bounding box represents a rectangular region in the image that encompasses the detected static target. The bounding box data may include coordinates of the corners or edges of the rectangular region surrounding the static target in the image. This condensed representation provides a simplified yet informative description of the static target's location and size within the visual input, reducing the amount of data that needs to be processed by subsequent components of the system component 100.

The detector 102 may also perform additional processing on the visual input to extract other relevant features or attributes of the static target. For example, the detector 102 may analyze the color, shape, or texture of the static target to provide additional information in the condensed visual information 103 to enable a subsequent filter module (not shown here) to select the static target which is represented by the condensed visual information. The condensed visual information 103 generated by the detector 102 serves as input for the direction estimation module 104 and the vehicle controller 105. By providing a compact and relevant representation of the visual input, the detector 102 enables efficient processing and decision-making by the subsequent components of the system component 100.

A further detection module (not shown in the figure), e.g. to estimate the current speed based on consecutive camera images, could be deployed and serve as additional input generator for the direction estimation module and vehicle based controller. With this, either the velocity data gathered from the PLC/ drives can be substituted or enhanced to detect slippage.

The direction estimation module 104 of the system component 100 is configured to receive condensed visual information 103 from the detector 102 and actual velocity data 108 of the moving object. The direction estimation module 104 processes these inputs to estimate a direction towards the static target when the static target is not visible to the RGB camera 101.

In an example, the direction estimation module 104 comprises a recurrent neural network. The recurrent neural network is designed to process time-series data, allowing the direction estimation module 104 to consider past inputs and maintain an internal state. This architecture enables the direction estimation module 104 to estimate the direction towards the static target even when the static target is temporarily out of view of the RGB camera 101.

The direction estimation module 104 may be trained in parallel with the vehicle controller 105, meaning either in combination or also decoupled. For example, the training may be performed in a simulation environment, where various scenarios and trajectories can be generated to provide diverse training data. This parallel training approach allows for efficient development and optimization of both the direction estimation module 104 and the vehicle controller 105. The decoupled training enables an efficient development and optimization for each module on its own. This also increases the verification capabilities and help to debug which part of the system (i.e., vehicle controller or direction estimation module) is not performing as expected.

In addition to the condensed visual information 103, the direction estimation module 104 may process other types of visual information. For example, the direction estimation module 104 may receive preprocessed visual data that enables slippage detection. This additional visual information allows the direction estimation module 104 to consider factors such as wheel slippage when estimating the direction towards the static target.

The system component 100 may include an inertial measurement unit configured to provide additional velocity information to the direction estimation module 104. The inertial measurement unit may measure linear and angular accelerations, providing more accurate and high-frequency velocity data to complement the actual velocity data 108 received from other sources.

The direction estimation module 104 receives the condensed visual information 103 and actual velocity data 108 as inputs. These inputs are processed by the recurrent neural network or other suitable algorithm within the direction estimation module 104 to generate an estimated direction towards the static target. The estimated direction combined with condensed visual information is then provided to the vehicle controller 105, which uses this information to generate appropriate control commands 106 for the moving object AGV, 111.

The system component 100 includes a vehicle controller 105 configured to receive inputs and generate control commands 106 for guiding the automated guided vehicle 202. As shown in FIG. 1, the vehicle controller 105 receives concatenated information 109, which combines the output of the direction estimation module 104 with the condensed visual information 103 from the detector 102.

The vehicle controller 105 processes the combined information using machine learning techniques to generate appropriate control commands 106. These control commands 106 may include instructions for controlling the movement and steering of the automated guided vehicle 202 as the automated guided vehicle 202 navigates towards the load carrier 201.

In an example, the vehicle controller 105 may be implemented as a neural network trained to map the concatenated input information to suitable control commands 106. The neural network may be trained using supervised learning techniques like imitation learning, where example input-output pairs are used to optimize the network's parameters, or it may be trained using reinforcement learning in combination with a simulated environment. While supervised learning techniques require the generation of predefined expert trajectories, the training through reinforcement learning techniques eliminate this requirement.

The vehicle controller 105 generates the control commands 106 by analyzing the estimated direction provided by the direction estimation module 104 in conjunction with the condensed visual information 103. This combined analysis allows the vehicle controller 105 to make informed decisions about how to guide the automated guided vehicle 202 towards the load carrier 201, even when the load carrier 201 may be temporarily out of view of the RGB camera 101.

The control commands 106 generated by the vehicle controller 105 are sent to the PLC drives 107 for execution. These control commands 106 (vₓ , ω) may include instructions for adjusting the speed and direction of the automated guided vehicle 202 to follow the trajectory towards the load carrier 201. By utilizing machine learning techniques, the vehicle controller 105 can adapt to various scenarios and environmental conditions, potentially improving the overall performance and efficiency of the automated guided vehicle AGV 111, 202 in approaching and interacting with the load carrier 201 in unstructured or new environments. The system component 100 includes PLC drives 107 configured to implement the control commands 106 generated by the vehicle controller 105. The PLC drives 107 are responsible for translating the control commands 106 into physical actions of the moving object, such as adjusting motor speeds or steering mechanisms.

The PLC drives 107 receive the control commands 106 from the vehicle controller 105. These control commands 106 may include instructions for linear and angular velocities of the moving object. The PLC drives 107 interpret these commands and activate the appropriate actuators or motors to execute the desired movement of the moving object.

In addition to implementing the control commands 106, the PLC drives 107 are configured to provide actual velocity data 108 as feedback to the direction estimation module 104. The PLC drives 107 may include sensors or encoders that measure the actual movement of the moving object. These measurements are used to generate the actual velocity data 108, which represents the real-world motion of the moving object. The actual velocity data 108 provided by the PLC drives 107 may include information about the linear and angular velocities of the moving object. By providing the actual velocity data 108 to the direction estimation module 104, the PLC drives 107 enable a closed-loop control system within the system component 100. This feedback loop allows the direction estimation module 104 to compare the intended movement (based on the control commands 106) with the actual movement of the moving object. The direction estimation module 104 can then use this information to refine its direction estimates and compensate for any discrepancies between the commanded and actual motion of the moving object.

The PLC drives 107 may also include safety features to prevent excessive or dangerous movements of the moving object. For example, the PLC drives 107 may implement velocity limits or acceleration constraints to ensure smooth and safe operation of the moving object.

The system component 100 includes an input node and concatenations 109, 110 that direct and combine information flows within the system. As shown in FIG. 1, the input node receives the condensed visual information 103 from the detector 102. The input node directs the condensed visual information 103 along two paths within the system component 100. In the first path, the input node sends the condensed visual information 103 directly to the concatenation 109. In the second path, the input node directs the condensed visual information 103 to the direction estimation module 104. The concatenation 109 combines the information from these two paths. The concatenation 109 receives the direct path of condensed visual information 103 from the input node. The concatenation 109 also receives the output from the direction estimation module 104, which processes the condensed visual information 103 along with the actual velocity data 108 from the PLC drives 107.

In an example, the system component 100 may work with pose input instead of condensed visual information 103. In this case, the input node 110 may receive pose data, which includes information about the position and orientation of the static target relative to the moving object. The input node 110 may then direct this pose data along similar paths as described for the condensed visual information 103. The concatenation 109 may then combine the pose data with the output from the direction estimation module 104, providing a comprehensive input for the vehicle controller 105 to generate appropriate control commands 106.

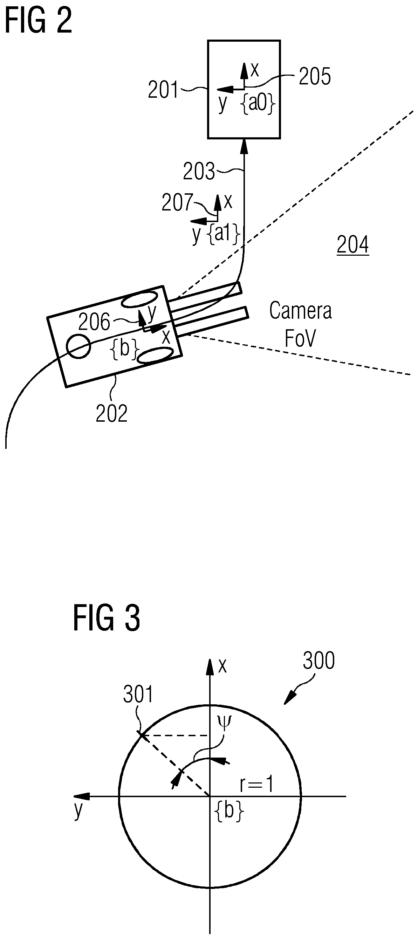

FIG. 2 illustrates an overview of a system comprising an automated guided vehicle (AGV) 202 and a load carrier 201. The system component 100 described previously may be implemented within the automated guided vehicle 202 to enable navigation towards the load carrier 201. A load carrier 201 is depicted as a static target positioned at a distance from the automated guided vehicle 202. The load carrier 201 may represent various types of objects that the automated guided vehicle 202 is designed to approach and interact with, such as pallets, containers, or other storage units commonly used in industrial or logistical settings.

An automated guided vehicle 202 is shown as a moving object equipped with various components for autonomous navigation and operation. The automated guided vehicle 202 may incorporate the system component 100, including the RGB camera 101, detector 102, direction estimation module 104, vehicle controller 105, and PLC drives 107. These components work together to enable the automated guided vehicle 202 to navigate towards and interact with the load carrier 201.

The spatial relationship between the automated guided vehicle 202 and the load carrier 201 is dynamic, as the automated guided vehicle 202 moves along a path 203 to approach the load carrier 201. The system component 100 within the automated guided vehicle 202 processes visual information 103 captured by the RGB camera 101, estimates the direction towards the load carrier 201 using the direction estimation module 104, and generates appropriate control commands 106 through the vehicle controller 105 to guide the automated guided vehicle 202 towards the load carrier 201.

The automated guided vehicle AGV, 111, 202 serves as the moving object in the system, while the load carrier 201 functions as the static target. This configuration allows the system to demonstrate the capabilities of the direction estimation and control methods described earlier, particularly in scenarios where the load carrier 201 may temporarily be out of view of the RGB camera 101 mounted on the automated guided vehicle 202. FIG. 2 illustrates an automated guided vehicle 202 with its respective camera field of view 204 approaching the load carrier 201. The automated guided vehicle has to follow a trajectory 203 to approach the load carrier 201. The trajectory 203 is not known by the controller as the control commands 106 are ad-hoc generated based on the condensed visual information 103. To further generate control commands 106 even in the absence of the load carrier 201 from the camera's field of view 204, the vehicle controller 105 additionally utilizes the output of the direction estimation module 104.

Figure 2 shows a top view of an AGV 202 with the camera mounted and a targeted object, e.g. a load carrier 201, with a possible path. The camera field of view FoV 204 represents the visual range of the RGB camera mounted on the automated guided vehicle 202. As the automated guided vehicle 202 moves along a trajectory 203, the load carrier 201 may temporarily move out of the camera field of view 204. During these periods when the load carrier 201 is not visible, the direction estimation module 104 relies on the previously captured visual information 103 and the actual velocity data 108 from the PLC drives 107 to estimate the direction towards the load carrier 201.

The system component 100 is configured to detect when the load carrier 201 becomes visible to the RGB camera 101 again. When the load carrier 201 re-enters the camera field of view 204, the detector 102 processes the new visual input to generate updated visual information 103. The direction estimation module 104 then uses this updated visual information 103 to refine and update the estimated direction towards the load carrier 201.

By continuously updating the estimated direction based on the visual input when the load carrier 201 is visible and relying on the direction estimation module 104 when the load carrier 201 is out of view, the system component 100 enables the automated guided vehicle 202 to navigate smoothly towards the load carrier 201 even in scenarios requiring movements causing temporary no visual contact to the load carrier.

FIG. 2 illustrates a reference frame 205 associated with the load carrier 201 and the automated guided vehicle 202. The reference frame 205 provides a coordinate system for describing the relative positions and orientations of the load carrier 201 and the automated guided vehicle 202.

The reference frame 205 for the load carrier 201 is depicted as two perpendicular arrows labeled "{a}" in FIG. 2. This reference frame 205 establishes a local coordinate system centered on the load carrier 201, allowing the system component 100 to describe the direction of the load carrier 201 relative to the automated guided vehicle 202.

Similarly, the automated guided vehicle 202 has a reference frame 206 labeled "{b}" in FIG. 2. This reference frame 206 provides a coordinate system fixed to the automated guided vehicle 202, enabling the system component 100 to express the direction from the automated guided vehicle 202 towards the load carrier 201. The system component 100 utilizes these reference frames 205, 206 for direction estimation. Instead of directly estimating the direction towards the load carrier's reference frame 205, the direction towards a target reference frame 207, e.g. an alignment point in front of the load carrier 201 can be executed by the direction estimation module. The result of the direction estimation is represented in FIG 3 by a direction point 301 on the unit circle 300. This direction point 301 indicates the direction towards the target reference frame 205 or 207 based on the reference frame of the automated guided vehicle 206, even if the load carrier is temporarily not visible.

The direction estimation module 104 of the system component 100 processes the visual information 103 from the detector 102 and the actual velocity data 108 from the PLC drives 107 to generate the direction estimation module's output 104. When the load carrier 201 is within the camera field of view 204 of the RGB camera 101, the direction estimation module 104 uses the condensed visual information 103 to directly determine the direction towards the load carrier 201.

When the load carrier 201 is outside the camera field of view 204, the direction estimation module 104 relies on the previously captured visual information 103 and the actual velocity data 108 to estimate the direction towards the load carrier 201. The direction estimation module 104 may use techniques such as dead reckoning or sensor fusion to maintain an estimate of the relative position between the automated guided vehicle 202 and the load carrier 201 if known previously. If only condensed visual information 103 is provided to the system component 100, the direction estimation module 104 may use learning-based techniques to estimate the direction based on the condensed visual information 103 and actual velocity data 108. The direction estimation module 104 is continuously updated as the automated guided vehicle 202 applies the predicted control commands 106. The vehicle controller 105 uses the output of the direction estimation module 104 to generate appropriate control commands 106 for guiding the automated guided vehicle 202 towards the load carrier 201 if no condensed visual information 103 is available as the load carrier 201 is not in the cameras field of view 204.

The system component 100 utilizes a unit circle 300 representation for direction estimation, as illustrated in FIG. 3. The unit circle 300 provides a consistent and efficient method for representing the estimated direction towards the load carrier 201 from the automated guided vehicle 202. The unit circle 300 is centered on a Cartesian coordinate system, which is consistent with the reference frame 206 of the AGV 202.

The direction estimation module 104 represents the estimated direction as a direction point 301on the unit circle 300. The origin of the unit circle 300 corresponds to the reference frame 205 of the automated guided vehicle 202. This representation allows the system component 100 to express the direction towards the load carrier 201 in a normalized format, regardless of the actual distance between the automated guided vehicle 202 and the load carrier 201. By using the unit circle 300 representation, the direction estimation module 104 can provide a consistent input to the vehicle controller 105 in form of the sine and cosine of the direction point 301. The vehicle controller 105 can then interpret this representation to generate appropriate control commands 106 for guiding the automated guided vehicle 202 towards the load carrier 201.

The unit circle 300 representation enables the system component 100 to handle various scenarios, including cases where the load carrier 201 is temporarily outside the camera field of view 204 of the RGB camera 101. In such situations, the direction estimation module 104 can continue to update the estimated direction based on the actual velocity data 108 received from the PLC drives 107, maintaining a continuous estimate of the direction towards the load carrier 201.

The system component 100 utilizes a direction point 301 on the unit circle 300 to represent the estimated direction towards the load carrier 201. A direction point 301 is shown on the unit circle 300 in FIG. 3. The direction point 301 encodes the directional information as x and y coordinates on the unit circle 300, providing a normalized representation of the direction regardless of the actual distance between the automated guided vehicle 202 and the load carrier 201.

An angle representation 302 is depicted in FIG. 3 as a dotted line connecting the origin of the coordinate system to the direction point 301 on the unit circle 300. The angle representation 302 provides a visual indication of the angle between the x-axis of the automated guided vehicle's reference frame 205 and the estimated direction towards the load carrier 201. The direction estimation module 104 may output the estimated direction as either the x and y coordinates of the direction point 301 on the unit circle 300 or as the angle represented by the angle representation 302. The x and y coordinates of the direction point 301 correspond to the cosine and sine of the angle, respectively. This representation allows for consistent encoding of the directional information, even when the angle crosses the ±π boundary.

The vehicle controller 105 receives the encoded directional information from the direction estimation module 104 and uses the information to generate appropriate control commands 106 for guiding the automated guided vehicle 202 towards the load carrier 201. The consistent representation provided by the direction point 301 and angle representation 302 enables efficient processing by the vehicle controller 105, regardless of the relative positions of the automated guided vehicle 202 and the load carrier 201.

The system transition between using estimated direction and direct visual input when the target comes back into view is done automatically by the machine learning based controller. The visual information is always provided to the controller, but if not visible the bounding box data is "zeroed out". The controller learns to focus then on the direction estimation.

The direction estimation module 104 may be trained using predefined trajectories. These predefined trajectories may include various scenarios where the load carrier 201 moves in and out of the camera field of view 204 of the RGB camera 101. By training on these predefined trajectories, the direction estimation module 104 learns to estimate the direction towards the load carrier 201 accurately, even when the load carrier 201 is temporarily not visible.

The system component 100 may include a computer program product comprising instructions executed on a processor to perform the method of estimating the direction towards the load carrier 201 from the automated guided vehicle 202. The computer program product may include instructions for processing the visual information 103 from the detector 102, estimating the direction using the direction estimation module 104, and generating control commands 106 using the vehicle controller 105 based on the estimated direction represented by the direction point 301 or angle representation 302.

Generally speaking, the invention can be applied as soon as the positioning of an object in relation to a camera in an unknown environment is to be tracked.

The invention is not limited to a camera mounted on the moving object that pursues a static target (like in the described AGV use case) but can also be applied to a static camera with moving targets. The velocities of the moving objects (camera or target object) must be known or calculated.

Other use cases include Visual factory monitoring (e.g. covering blind spots), Visual Servoing (e. g. "Peg Insertion", "Visual Controlled Robotic Assembly") or Automated control of harbor cranes for picking up containers (with visual recognition of container corners) are conceivable.

In addition to the specific use case of directional recognition described above, we introduce a general recommendation for the construction of machine learning architectures. Typically, in the state of the art, networks are extended by a memory by adding corresponding network layers (e.g. RNN and its derivatives) directly to the model. The invention disclosure proposes to:
identify the relevant memory information and determine it in an upstream method. This separation simplifies the evaluation of the individual components and increases the explainability of the model.

## Claims

1. A machine learning based vehicle controller (100) system for estimating direction towards a static target (201) from a moving object (202), comprising:
a direction estimation module (104) configured to receive condensed visual information from a detector (102) which is configured to process visual input of a camera (101) and actual velocity data of the moving object (108), and estimate a direction towards the static target (201) when the static target is not visible to the camera (100); and
configured to receive the estimated direction from the direction estimation module (104) and generate control commands (106) for the moving object (111) based on the estimated direction.

2. The system of claim 1, wherein the direction estimation module (104) is configured to represent the estimated direction as a point (301) on a unit circle (300) with the moving object's reference frame ({b}) as the circle's origin.

3. The system of claim 1 or 2, wherein the direction estimation module (104) comprises a recurrent neural network or a long short-term memory (LSTM) network.

4. The system of any of claims 1 to 3, further comprising an inertial measurement unit (108) configured to provide additional velocity information to the direction estimation module (104).

5. The system of any preceding claim, wherein the condensed visual information comprises bounding box data of the static target extracted from the visual input.

6. A computer implemented method for estimating direction towards a static target (201) from a moving object (202), the method comprising:
capturing visual input of an environment using a camera (101);
processing the visual input to generate condensed visual information (103);
receiving the condensed visual information and actual velocity data (108) of the moving object at a direction estimation module (104);
estimating, using the direction estimation module (104), a direction towards the static target when the static target is not visible to the camera (101); and
generating control commands for the moving object based on the estimated direction using a machine learning based vehicle controller (105).

7. The computer implemented method of claim 6, wherein estimating the direction comprises representing the estimated direction as a point on a unit circle with the moving object's reference frame as the circle's origin.

8. The computer implemented method of claim 6 or 7, wherein the direction estimation module (104) comprises a recurrent neural network or a long short-term memory (LSTM) network.

9. The computer implemented method of any of claims 6 to 8, further comprising providing additional velocity information to the direction estimation module (104) using a suitable sensor system, in particular aninertial measurement unit.

10. The computer implemented method of any preceding claim, wherein the condensed visual information (103) comprises bounding box data of the static target extracted from the visual input.

11. The computer implemented method of any of claims 6 to 10, further comprising training the direction estimation module (104) using predefined trajectories.

12. The computer implemented method of any of claims 6 to 11, wherein generating the control commands comprises:
combining the estimated direction with the condensed visual information; and
processing the combined information using the machine learning based vehicle controller (105).

13. The computer implemented method of any of claims 6 to 12, further comprising:
detecting when the static target (becomes visible to the camera (101); and
updating the estimated direction based on the visual input of the static target (201).

14. The computer implemented method of any of claims 6 to 13, wherein the moving object is an automated guided vehicle (202) and the static target is a load carrier (201).

15. A computer program product comprising instructions which, when executed on a processor, cause the processor to perform the method of one of claims 6 to 14.
